# EUROPEAN PATENT SPECIFICATION

(11) **EP 4 462 553 B1**
(45) Date of publication and mention of the grant of the patent: **02.09.2026**
(21) Application number: 23907262.2
(22) Date of filing: 07.07.2023
(51) Int. Cl.: H01M 10/658, H01M 50/342, H01M 50/24, H01M 50/249, H01M 50/204, H01M 50/30

(54) **BATTERY PACK AND VEHICLE INCLUDING THE SAME**
BATTERIEPACK UND FAHRZEUG DAMIT
BLOC-BATTERIE ET VÉHICULE LE COMPRENANT

(30) Priority: 23.12.2022 KR 20220183383; 31.03.2023 KR 20230043172
(43) Date of publication of application: 13.11.2024
(60) Divisional application: 26168073.0 / 4 742 398
(73) Proprietor: LG Energy Solution, Ltd., Seoul 07335 (KR)
(72) Inventor: PARK, Jeong-Hoon, Daejeon 34122 (KR); KIM, Soo-Youl, Daejeon 34122 (KR); JANG, Sung-Hwan, Daejeon 34122 (KR)
(74) Representative: Plasseraud IP
(86) International application number: PCT/KR2023/009704
(87) International publication number: WO 2024/135970

(56) References cited:
- WO-A1-2020/129274
- WO-A1-2020/180114
- JP-A- 2022 117 983
- KR-A- 20210 112 656
- KR-A- 20210 133 539
- KR-A- 20210 157 757
- KR-A- 20220 115 532
- US-B1- 9 806 310

## Description

### TECHNICAL FIELD

The present disclosure relates to a battery pack and a vehicle including the same, and more particularly, to a battery pack with improved safety against thermal events and a vehicle including the same.

The present application claims priority to Korean Patent Application No. 10-2022-0183383 filed on December 23, 2022 in the Republic of Korea and Korean Patent Application No. 10-2023-0043172 filed on March 31, 2023 in the Republic of Korea.

### BACKGROUND ART

Secondary batteries have high applicability according to product groups and electrical characteristics such as high energy density, and thus, are commonly applied not only to mobile devices but also to electric vehicles (EVs) or hybrid vehicles (HEVs) driven by electric power sources. Because secondary batteries may radically reduce the use of fossil fuel and do not generate any by-products that come with energy consumption, the secondary batteries are gaining attention as a new alternative energy source for improving eco-friendliness and energy efficiency.

Types of secondary batteries that are currently widely used include lithium-ion batteries, lithium polymer batteries, nickel cadmium batteries, nickel hydride batteries, and nickel zinc batteries. An operating voltage of a unit secondary battery cell, that is, a unit battery cell, ranges from about 2.5 V to about 4.5 V. Accordingly, when a higher output voltage is required, a battery pack may be configured by connecting a plurality of battery cells in series. Also, a battery pack may be configured by connecting a plurality of battery cells in parallel according to charge/discharge capacity required for the battery pack. Accordingly, the number of battery cells included in a battery pack may be set in various ways according to a required output voltage or charge/discharge capacity.

When a battery pack is configured by connecting a plurality of battery cells in series/parallel, a method of first configuring a battery module including at least one battery cell and adding other elements by using the at least one battery module to configure a battery pack or battery rack is general.

However, if a plurality of secondary batteries (battery cells) or a plurality of battery modules are crowded in a small space as above, they may be vulnerable to thermal events. In particular, if an event such as thermal runaway occurs in one battery cell, high-temperature gas or flame, heat, etc. may be generated. If such gas, flame, heat, etc. is transferred to other battery cells included in the same battery module, an explosive chain reaction situation such as thermal propagation may occur. Also, this chain reaction not only causes accidents such as fire or explosion in the relevant battery module, but can also cause fire or explosion in other battery modules.

Moreover, in the case of middle- or large-sized battery packs for electric vehicles, etc., a large number of battery cells and battery modules are included to increase output and/or capacity, so the risk of thermal chain reaction may increase further. In addition, in the case of a battery pack mounted on an electric vehicle, etc., there may be users such as drivers nearby. Therefore, if a thermal event occurring in a specific battery module is not properly controlled and a chain reaction occurs, it may cause not only significant property damage but also loss of life.

Therefore, if thermal runaway due to a thermal event occurs on a battery module basis within the battery pack, it is important that such high-temperature gas or flame and ejected matter, such as particles, escapes from the battery pack more quickly to prevent greater risks such as secondary ignition or explosion due to an increase in the internal pressure of the battery pack.

However, within the battery pack, mechanisms for accommodating the battery module or structures for partitioning different battery modules within the battery pack are made of aluminum to ensure rigidity, and most of them are melt at about 600°C. During a thermal event, the particles generated due to the melting of these structures collapse the mechanisms of the battery modules or the structures used to partition different battery modules within the battery pack, or increase the internal pressure of the battery pack by blocking the discharge portion of the venting unit of the battery pack, which becomes an important factor that can cause greater damage, such as secondary ignition or explosion of the battery pack as described above.

In addition, in the case of a conventional battery pack, there is a problem that the collapse of the aforementioned mechanism or the structures such as venting unit may be accelerated due to the influx of ejected matter such as high-temperature gas, flame, or particles generated during a thermal event into a gap space generated by assembly tolerances between the mechanisms of the battery modules described above or the components constituting the structures partitioning the battery modules.

Therefore, there is a need to find a way to provide a battery pack and a vehicle including the same that can increase safety against thermal events while solving the above-mentioned problems. Examples of the background art can be found in WO 2020/129274 A1, WO 2020/180114 A1 and US 9 806 310 B1.

### DISCLOSURE

### Technical Problem

The present disclosure is designed to solve the problems of the related art, and therefore the present disclosure is directed to providing a battery pack with improved safety against thermal events and a vehicle including the battery pack.

In addition, another object of the present disclosure is to provide a battery pack that can increase energy efficiency while slimming down the battery pack, and a vehicle including the battery pack.

However, the technical problem to be solved by the present disclosure is not limited to the above-mentioned problem, and other problems not mentioned will be clearly understood by those skilled in the art from the present disclosure described below.

### Technical Solution

In order to accomplish the above object, the present invention provides a battery pack, comprising a plurality of cell assemblies containing one or more battery cells and arranged in at least one row; a pack case configured to accommodate the plurality of cell assemblies; and a partition member configured to partition the plurality of cell assemblies within the pack case and made of flexible material , wherein the partition member is in close contact with the plurality of cell assemblies.

Also, preferably, the partition member may be in close contact with a side surface of the plurality of cell assemblies in an arrangement direction of the plurality of cell assemblies.

Also, preferably, the partition member may be made of fire-resistant rubber material.

Also, preferably, the partition member may be made of insulating rubber material.

Also, preferably, the partition member may be placed between the plurality of cell assemblies in an arrangement direction of the plurality of cell assemblies.

Also, preferably, the partition member may be provided in plurality corresponding to the number of the plurality of cell assemblies, and the plurality of partition members may be in close contact with both side surfaces of each cell assembly.

Also, preferably, the plurality of partition members may be arranged to be spaced from each other by a predetermined distance in an arrangement direction of the plurality of cell assemblies.

A venting portion is provided at a lower portion of the one or more battery cells. The partition member may surround side surfaces of the plurality of cell assemblies while exposing the venting portion.

A bottom of the pack case faces the venting portion and is ruptured or melted, when gas or flame is discharged through the venting portion, to discharge the gas or flame out of the pack case.

Also, preferably, the pack case may include a case body configured to support the plurality of cell assemblies and the partition member; and a case cover coupled with the case body to accommodate the plurality of cell assemblies and the partition member. A bottom of the pack case faces the venting portion and is ruptured or melted, when gas or flame is discharged through the venting portion, to discharge the gas or flame out of the pack case.

Also, preferably, a potting resin may be filled in the space between the plurality of cell assemblies and the case cover.

Also, preferably, the potting resin may be filled in the space between the plurality of cell assemblies.

Also, the present disclosure provides a vehicle comprising the battery pack according to the above embodiments.

### Advantageous Effects

According to various embodiments as described above, it is possible to provide a battery pack with improved safety against thermal events and a vehicle including the battery pack.

In addition, according to various embodiments as described above, it is possible to provide a battery pack that can increase energy efficiency while slimming down the battery pack, and a vehicle including the battery pack.

In addition, the present disclosure may have various other effects, and these effects will be explained in each embodiment, or the explanation will be omitted for effects that can be easily inferred by a person skilled in the art.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view for describing a battery pack according to an embodiment of the present disclosure.
FIGS. 2 and 3 are views to for describing a partition member surrounding a cell assembly of the battery pack of FIG. 1.
FIG. 4 is a view for describing a venting mechanism during a thermal event of the battery pack in FIG. 1.
FIG. 5 is a view for describing a battery pack according to another embodiment of the present disclosure.
FIG. 6 is a view for describing a venting mechanism during a thermal event of the battery pack of FIG. 5.
FIG. 7 is a view for describing a battery pack according to still another embodiment of the present disclosure.
FIG. 8 is a view for describing a battery pack according to still another embodiment of the present disclosure.
FIG. 9 is a view for describing a battery pack according to still another embodiment of the present disclosure.
FIG. 10 is a view for describing a venting mechanism during a thermal event of the battery pack of FIG. 9.
FIG. 11 is a view for describing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

On the other hand, in the present disclosure, terms indicating directions such as up, down, left, right, front, and back are used, but these terms are only for convenience of explanation, it is obvious to those skilled in the art of the present disclosure that they may vary depending on the location of the target object or the location of the observer.

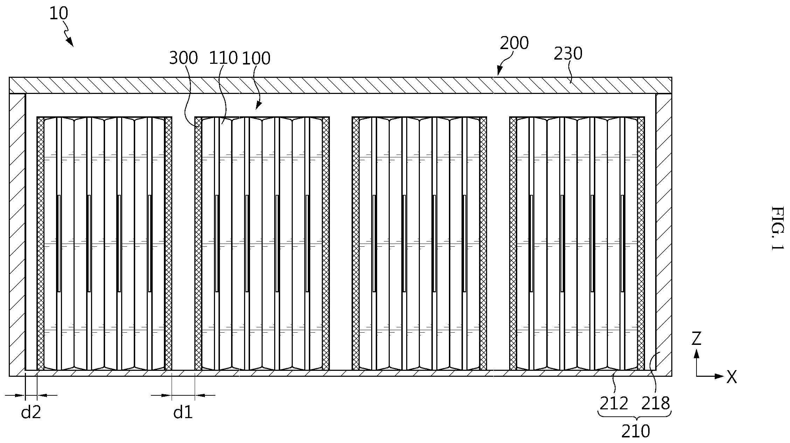

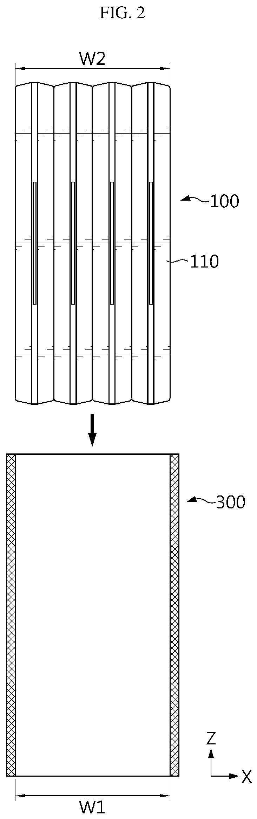

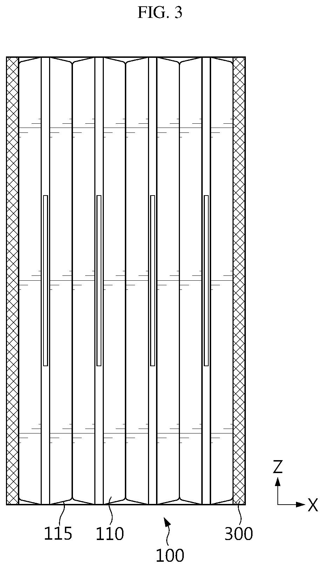

FIG. 1 is a view for describing a battery pack 10 according to an embodiment of the present disclosure, and FIGS. 2 and 3 are views to for describing a partition member 300 surrounding a cell assembly 100 of the battery pack 10 of FIG. 1.

Referring to FIGS. 1 to 3, the battery pack 10 includes a cell assembly 100, a pack case 200, and a partition member 300.

The cell assembly 100 includes one or more battery cells 110. In this embodiment, the description is limited to the fact that the cell assembly 100 includes a plurality of battery cells 110 in order to increase the output and/or capacity of the battery pack 10.

The plurality of battery cells 110 are secondary batteries and can be prepared as pouch-type secondary batteries. The plurality of battery cells 110 may be stacked so that they can be electrically connected to each other. Meanwhile, in this embodiment, the plurality of battery cells 110 are limited to being provided as pouch-type secondary batteries, but the cell assembly may also be prepared as a stack of cylindrical secondary batteries or prismatic secondary batteries other than the pouch-type secondary batteries.

The cell assembly 100 is provided in plurality and arranged in at least one row. The arrangement form of the plurality of cell assemblies 100 may vary depending on the required capacity, size or shape of the battery pack 10, and an arrangement of two or more rows or a matrix arrangement may be possible. Hereinafter, in an embodiment of the present disclosure, the plurality of cell assemblies 100 are limited to being arranged in a row along the longitudinal direction (X-axis direction) of the battery pack 10.

The pack case 200 accommodates the plurality of cell assemblies 100. To this end, an accommodation space capable of accommodating the plurality of cell assemblies 100 may be provided in the pack case 200. The specific structure of the pack case 200 will be discussed in more detail in the related description below.

The partition member 300 partitions the plurality of cell assemblies 100 within the pack case 200. The partition member 300 may support the plurality of cell assemblies 100 while guiding the placement position of the plurality of cell assemblies 100 within the pack case 200.

The partition member 300 is made of flexible material. The partition member 300 may surround the plurality of cell assemblies 100 in close contact. Specifically, the partition member 300 may be in close contact with the outside of the plurality of cell assemblies 100 and surround the outside of the plurality of cell assemblies 100. The partition member 300 as above may function as a housing for accommodating the plurality of cell assemblies 100.

A structure such as a conventional module housing for accommodating the cell assemblies 100 is made of metal, generally aluminum, unlike the partition member 300, and is provided as a frame assembly with a considerable weight. Therefore, the conventional battery pack is generally configured to include a plurality of battery modules composed of these cell assemblies and a module housing for accommodating these cell assemblies. However, when the battery pack is composed of battery modules containing a plurality of cell assemblies, like a conventional battery pack, during a thermal event, the metal structure such as the module housing melts (approximately, at about 600°C), so a large amount of particles or the like are generated due to the melting of the structure in addition to high-temperature gas or flame. Excessive ejected matter, such as this large amount of particles, causes problems such as collapse of the mechanism that constitutes the battery module within the battery pack or the structure for partitioning the battery modules.

In addition, excessive ejected matter due to the large amount of particles mentioned above blocks the discharge part of the venting unit for expelling gas or flame to the outside of the battery pack, increasing the pressure inside the battery pack, which causes greater risks such as secondary ignition or explosion of the battery pack when a thermal event occurs.

In addition, in the case of a frame assembly such as a conventional module housing, a gap space due to assembly tolerances cannot be avoided when assembling component parts or receiving the cell assembly. If ejected matter, such as high-temperature gas, flame, or particles, flows into this gap space during the aforementioned thermal event, it becomes more difficult to discharge the ejected matter, etc. from the inside of the battery pack, further accelerating the collapse of the battery pack mechanism.

In an embodiment of the present disclosure, instead of a frame assembly such as a separate module housing for accommodating the cell assemblies 100 as in the prior art, the partition member 300 that surrounds the plurality of cell assemblies 100 in close contact may be provided using a flexible material to accommodate and partition the plurality of cell assemblies 100 within the pack case 200.

Therefore, in an embodiment of the present disclosure, through the partition member 300 made of the flexible material, unlike the conventional module housing made of metal, during a thermal event, the amount of ejected matter such as particles that are melted and generated by a high-temperature gas or flame may be reduced, so the risk of collapse of the structure inside the battery pack 10 or blocking of the venting path due to the ejected matter such as particles generated due to metal melting can be significantly lowered. As such, in an embodiment of the present disclosure, the risk of secondary damage that may occur when the thermal event occurs can be minimized through the partition member 300.

Additionally, in an embodiment of the present disclosure, through the partition member 300 in close contact with the plurality of cell assemblies 100, a gap space is not created between the plurality of cell assemblies 100 and the partition member 300, so problems such as accumulation or stagnation of ejected matter such as high-temperature gas, flame, or particles that can occur within the gap space during a thermal event can be fundamentally prevented.

In addition, in an embodiment of the present disclosure, through the partition member 300, a frame assembly such as a separate module housing made of metal, which has a considerable weight as in the past, can be omitted, thereby realizing slimming of the entire battery pack 10 and significantly increasing the energy efficiency while reducing weight. In other words, in the present disclosure, it is possible to configure a battery pack 10 of so-called CTP (Cell To Pack) type, which configures battery pack 10 while omitting the module housing, through the partition member 300.

In addition, in an embodiment of the present disclosure, the partition member 300 is made of a flexible material, so of course, easier assembly can be secured when accommodating the cell assemblies 100.

Below, the partition member 300 according to an embodiment of the present disclosure will be explained in more detail.

The partition member 300 may be in close contact with the side surface of the plurality of cell assemblies 100 in the arrangement direction (X-axis direction) of the plurality of cell assemblies 100. In the case of pouch-type secondary batteries, cell expansion, called cell swelling, generally occurs during overheating or continued charging and discharging, and this cell swelling has the greatest amount of deformation on the side surface of the battery cell 110.

In an embodiment of the present disclosure, since the partition member 300 is in close contact with the side surface of the plurality of cell assembly 100, cell expansion of the cell assembly 100 can be effectively controlled during cell swelling.

The partition member 300 may surround only the side surfaces of the plurality of cell assemblies 100 in close contact. That is, the partition member 300 may have an accommodation space therein to accommodate the cell assemblies 100 and may have an opening that exposes the upper and lower sides of the cell assemblies 100 in the upper and lower directions (Z-axis direction). To this end, the partition member 300 may be provided as a hollow structure with openings exposed in the upper and lower directions (Z-axis direction). The cell assemblies 100 may be inserted to be placed in the accommodation space inside the partition member 300 through the openings in the upper and lower directions (Z-axis direction) of the partition member 300.

Therefore, in this embodiment, work convenience for workers or the like can be increased during the assembly process between the cell assemblies 100 and the partition member 300. Additionally, in this embodiment, since the partition member 300 does not cover the upper and lower sides of the plurality of cell assemblies 100 in the upper and lower directions (Z-axis direction) of the cell assembly 100, the size of the entire battery pack 10 may be further slimmed in the upper and lower directions (Z-axis direction) of the battery pack 10.

In the opening exposed at the lower side of the partition member 300, the bottom of the plurality of battery cells 110 of the plurality of cell assemblies 100 may be in contact with the bottom plate 212 of the case body 210 of the pack case 200, which will be described later, or may be arranged to be spaced apart by a predetermined interval. Meanwhile, a venting portion 115 may be provided at the bottom of the battery cells 110 of the plurality of cell assemblies 100 to discharge internal gas or the like during a thermal event, which will be described in more detail in the related description below. In this way, the partition member 300 according to this embodiment can solve the problem of interference with the venting portion 115 of the plurality of battery cells 110 through the opening structure exposed in the upper and lower directions (Z-axis direction).

The partition member 300 may be made of fire-resistant rubber material. For example, the partition member 300 may be made of a flexible fire-resistant rubber material that can maintain its shape for at least 5 minutes when heated at approximately 1300°C to ensure fire resistance.

In an embodiment of the present disclosure, through the partition member 300 made of a fire-resistant rubber material, it is possible to withstand high-temperature gas or flame without changing the shape for a considerable period of time during a thermal event, so that the speed of thermal propagation to a cell assembly 100 adjacent to the cell assembly 100 in which the thermal event occurs can be delayed as much as possible, and the risk of occurrence of ejected matter such as a large amount of particles due to melting can be significantly reduced.

The partition member 300 may be made of an insulating rubber material. In an embodiment of the present disclosure, insulation performance can also be secured through the partition member 300 made of this insulating material, so that even if an electrical problem occurs in any one cell assembly 100, it is possible to effectively prevent short circuits or the like, which may be chained to the adjacent cell assemblies 100.

The partition member 300 may be arranged between the plurality of cell assemblies 100 in the arrangement direction (X-axis direction) of the plurality of cell assemblies 100. Through this arrangement structure of the partition member 300, the plurality of cell assemblies 100 may be partitioned, respectively, within the pack case 200, so that thermal propagation to adjacent cell assemblies 100 can be effectively delayed when a thermal event or the like occurs.

The partition member 300 may be provided in plurality corresponding to the number of the plurality of cell assemblies 100. The plurality of partition members 300 may be in close contact with both side surfaces of each cell assembly 100. Here, each of the plurality of partition members 300 may accommodate one cell assembly 100. That is, each partition member 300 may accommodate each cell assembly 100 and surround both sides of each cell assembly 100 in close contact.

In an embodiment of the present disclosure, the partition member 300 is provided in plurality to correspond to the number of the cell assemblies 100, and each partition member 300 accommodates the cell assembly 100, so the plurality of cell assemblies 100 can be supported more stably, and the plurality of cell assemblies 100 can be partitioned and placed separately more clearly within the pack case 200.

The plurality of partition members 300 may be provided as a hollow structure with the opening exposed in the upper and lower directions (Z-axis direction) while having an accommodation space therein to accommodate each cell assembly 100. Regarding the accommodation space, as an example, one partition member 300 and the cell assembly 100 accommodated within one partition member 300 are as follows. The accommodation width (W1) of the accommodation space of the partition member 300 may be provided to be equal to or smaller than the entire width (W2) of the cell assembly 100. This is to further increase the adhesion performance to both sides of the cell assembly 100 through the partition member 300 of the flexible material. More preferably, in an embodiment of the present disclosure, the accommodation width (W1) of the accommodation space of the partition member 300 may be formed to be smaller than the entire width (W2) of the cell assembly 100 to further increase the adhesion performance.

The plurality of partition members 300 may be arranged to be spaced apart from each other by a predetermined distance in the arrangement direction (X-axis direction) of the plurality of cell assemblies 100. Specifically, the plurality of partition members 300 may make the plurality of cell assemblies 100 be spaced apart from each other by a predetermined interval within the pack case 200.

Through this spaced arrangement structure, when a thermal event such as thermal runaway occurs in any one cell assembly 100, since the cell assembly 100 in which an abnormal situation has occurred is spaced apart from adjacent cell assemblies 100 by not only partition members 300 but also the space required for the spaced arrangement, the risk of thermal propagation can be minimized or delayed as much as possible.

The separation structure of the plurality of partition members 300 will be described in more detail as follows. The partition members 300 facing each other in the arrangement direction (X-axis direction) are arranged to have a first interval (d1), and the partition members 300 facing the inner wall of the pack case 200 in the arrangement direction (X-axis direction) may be arranged to have a second interval (d2). The first interval (d1) can be designed considering the cell expansion width in both lateral directions (X-axis direction) of the two cell assemblies 100 arranged opposite each other. Also, the second interval (d2) faces the inner wall of the pack case 200, and thus can be designed considering the cell expansion width in the lateral direction (X-axis direction) of one cell assembly 100. Therefore, the first interval (d1) may be formed to be larger than the second interval (d2). Preferably, the first interval (d1) may be provided to be approximately at least twice the size of the second interval (d2).

Below, one or more battery cells 110 of the plurality of cell assemblies 100 will be described in more detail.

The one or more battery cells 110, as described above, are provided as pouch-type secondary batteries, and may be configured to include an electrode assembly, a pair of electrode leads electrically connected to the electrode assembly, and a battery case that exposes a part of the pair of electrode leads and accommodates the electrode assembly, respectively.

A venting portion 115 is provided at the lower part (-Z-axis direction) of the plurality of battery cells 110. The venting portion 115 may be ruptured or melted at a predetermined temperature or pressure or above to allow gas or flame inside the battery cell 110 to be ejected in abnormal situations such as overheating, thereby guiding the ejecting matter such as gas or flame inside the battery cell 110 to be discharged to the outside of the battery cell 110.

The partition member 300 may surround the side surface of the plurality of cell assemblies 100 while exposing the venting portion 115. Since the partition member 300 exposes the venting portion 115, it does not cause interference with the venting portion 115 and thus may guide the smooth discharge of the ejected matter such as gas or flame through the venting portion 115.

Below, the pack case 200 according to an embodiment of the present disclosure will be described in more detail.

The bottom 212 of the pack case 200 faces the venting portion 115, and when ejected matter such as gas or flame is discharged through the venting portion 115, the bottom 212 may be ruptured or melted so that the gas or flame may be emitted out of the pack case 200.

In an embodiment of the present disclosure, since the bottom 212 of the pack case 200 is placed to face the venting portion 115, the ejected matter discharge path through the venting portion 115 is simplified, so the ejected matter can be emitted out of the pack case 200 more rapidly in abnormal situations such as thermal events. That is, in an embodiment of the present disclosure, the bottom 212 of the pack case 200 is arranged to face the venting portion 115, thereby inducing venting in the lower direction (-Z-axis direction) of the battery pack 10.

Therefore, the battery pack 10 according to an embodiment of the present disclosure induces bottom venting in the shortest path as directional venting, so that the ejected matter such as high-temperature gas or flame caused by the occurrence of the thermal event can be emitted out of the pack case 200 more rapidly.

The pack case 200 may include a case body 210 and a case cover 230.

The case body 210 may support the plurality of cell assemblies 100 and the partition member 300. Additionally, the case body 210 may have a forward accommodation space that may accommodate the plurality of cell assemblies 100 and the partition member 300.

The case cover 230 may be coupled with the case body 210 and accommodate the plurality of cell assemblies 100 and the partition member 300. Specifically, the case cover 230 may be coupled to the case body 210 by being coupled to the side plate 518 of the case body 210, which will be described later, through bolting or bonding. Of course, the coupling structure such as the bolting coupling or the bonding coupling is only an example, and other coupling structures for stably coupling the case cover 230 and the case body 210 to each other may also be possible.

The bottom 212 of the case body 210 faces the venting portion 115, and may be ruptured or melted to discharge the ejected matter, such as gas or flame, out of the pack case 200 when the ejected matter, such as gas or flame, is discharged through the venting portion 115. The bottom 212 of the case body 210 may have a relatively thin thickness in the case body 210 for easier rupture or melting.

Below, the case body 210 will be described in more detail.

The case body 210 may include a bottom plate 212 and a side plate 218.

The bottom plate 212 supports the plurality of cell assemblies 100 and the plurality of partition members 300, and may be disposed to face the venting portions 115 of the battery cells 110 of the plurality of cell assemblies 100.

The bottom plate 212 may open the inside of the pack case 200 by rupturing or melting at a certain temperature or pressure or above so that the ejected matter such as high-temperature gas or flame inside the pack case 200 can be ejected during the thermal event. The bottom plate 212 may be formed to have a thinner thickness than the side plate 218 for easier rupture or melting.

Meanwhile, the bottom plate 212 may include a venting unit that melts or ruptures at the above-mentioned temperature or pressure as a separate member.

Therefore, the bottom plate 212 itself may function as a venting unit, or a separate venting unit is provided on the bottom plate 212, so that directional venting for lower venting to the bottom of the pack case 200 during the thermal event can be implemented.

The side plate 218 is formed integrally with the bottom plate 212 and may extend vertically from both sides of the bottom plate 212. Meanwhile, the side plate 218 may be provided as a separate member from the bottom plate 212 and may be coupled with the bottom plate 212 through bolting or bonding to form the case body 210. The side plate 218 is coupled with the case cover 230 and may form the side exterior of the pack case 200.

Below, the venting mechanism for expelling high-temperature gas or flame inside the pack case 200 in abnormal situations such as a thermal event of the battery pack 10 according to an embodiment of the present disclosure will be described in more detail.

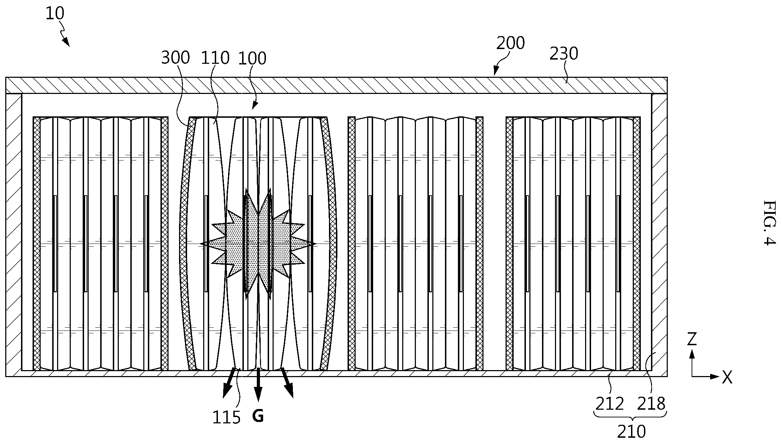

FIG. 4 is a view for describing a venting mechanism during a thermal event of the battery pack 10 in FIG. 1.

Referring to FIG. 4, an abnormal situation such as a thermal event may occur in at least one cell assembly 100 among the plurality of cell assemblies 100 of the battery pack 10. The thermal event may mean a thermal runaway situation due to overheating of at least one battery cell 110 of the cell assembly 100.

When a thermal runaway situation occurs in a specific cell assembly 100 within the pack case 200, thermal propagation to adjacent cell assemblies 100 causes a great risk that leads to serial ignition or further explosion of the entire battery pack 10, so it is important to prevent or delay this thermal propagation as much as possible.

In an embodiment of the present disclosure, as described above, since the partition member 300 partitions and covers adjacent cell assemblies 100 in the lateral direction (X-axis direction) of the battery pack 10, thermal propagation to adjacent cell assemblies 100 can be effectively prevented or slowed during thermal events of a specific cell assembly 100.

Meanwhile, in the case of the thermal event, the ejected matter G, such as high-temperature gas or flame, escaping through the venting portion 115 of at least one battery cell 110 of the cell assembly 100 where the thermal event has occurred, may be ejected to the lower portion (-Z-axis direction) of the battery pack 10 through the bottom plate 212 of the case body 210 of the pack case 200. The bottom plate 212 is ruptured or melted at a predetermined temperature or pressure or above inside the pack case 200 during the thermal event so that the ejected matter G such as the high-temperature gas or flame can be emitted out of the pack case 200.

In an embodiment of the present disclosure, the partition member 300 is provided in a structure that surrounds only both sides of the cell assemblies 100 so as not to interfere with the venting portion 115 of the battery cells 110 of the cell assemblies 100, so that the ejected matter G may be guided to be ejected faster and more rapidly.

Additionally, in an embodiment of the present disclosure, the venting portions 115 of the battery cells 110 of the cell assemblies 100 are disposed to directly face the bottom plate 212 of the pack case 200, so the ejection path of the ejected matter G for the lower venting can be implemented with the shortest distance.

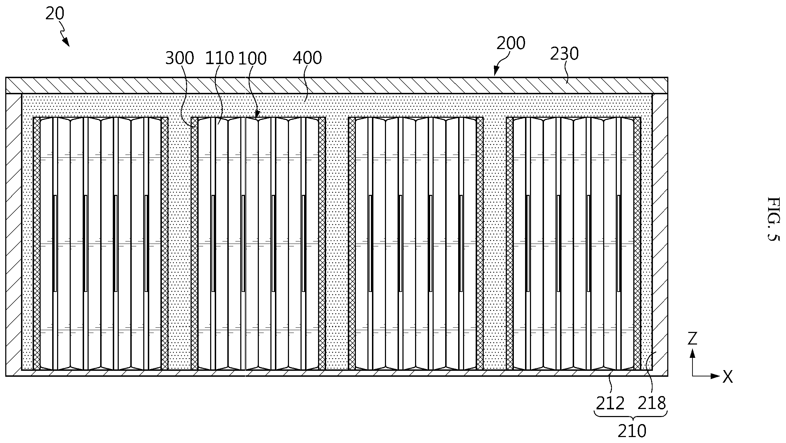

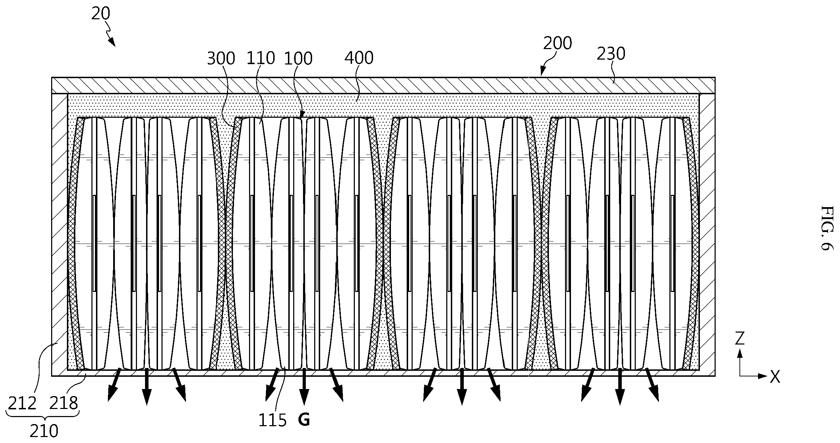

FIG. 5 is a view for describing a battery pack 20 according to another embodiment of the present disclosure, and FIG. 6 is a view for describing a venting mechanism during a thermal event of the battery pack 20 of FIG. 5.

Since the battery pack 20 according to this embodiment is similar to the battery pack 10 of the previous embodiment, redundant description of the same or similar configurations as the previous embodiment will be omitted, and the following will focus on the differences from the previous embodiment.

Referring to FIGS. 5 and 6, the battery pack 20 includes a plurality of cell assemblies 100, a pack case 200, a plurality of partition members 300, and may include a potting resin 400.

Since the plurality of cell assemblies 100, the pack case 200, and the plurality of partition members 300 are substantially the same or similar to the previous embodiment, redundant description will be omitted below.

The potting resin 400 may include silicone resin. Additionally, the potting resin 400 may include glass bubbles. The glass bubble may lower the specific gravity of the potting resin 400 and increase the energy density relative to weight.

The potting resin 400 may be filled in the space between the plurality of cell assemblies 100 and the case cover 230 of the pack case 200. In other words, the potting resin 400 may be filled in the upper (+Z-axis direction) space of the plurality of cell assemblies 100 inside the pack case 200. In this way, since the potting resin 400 is filled to cover the upper (+Z-axis direction) space of the cell assemblies 100 within the pack case 200, it is possible to effectively prevent the ejected matter G such as the high-temperature gas or flame from moving in the upper direction (+Z-axis direction) inside the pack case 200 or from entering the upper space inside the pack case 200 during the aforementioned thermal event.

Additionally, the potting resin 400 may be filled in the space between the plurality of cell assemblies 100. In other words, the potting resin 400 may also be filled between the partition members 300 surrounding the plurality of cell assemblies 100. Accordingly, when a thermal event or damage occurs due to an abnormal situation in at least one specific battery cell 110 among the plurality of cell assemblies 100, the potting resin 400 may prevent thermal propagation to adjacent cell assemblies 100 along with the partition member 300 and thus may effectively prevent additional thermal runaway due to heat transfer to adjacent cell assemblies 100. In addition, the potting resin 400 may also perform an insulating role to prevent electric connection to adjacent cell assemblies 100 in the event of a thermal event or damage in at least one specific battery cell 110 described above.

Within the pack case 200, the potting resin 400 may be continuously filled in the upper (+Z-axis direction) space of the cell assemblies 100, the space between the partition members 300 in the arrangement direction (X-axis direction) of the cell assemblies 100, and the inner wall space on both sides (X-axis direction) of the pack case 200, without any break or separation space. In this way, since the potting resin 400 according to the embodiment of the present disclosure is continuously filled without interruption within the pack case 200, it is possible to realize even heat dispersion without causing heat dispersion deviation of the cell assemblies 100 and increase the cooling performance of the battery pack 20.

The potting resin 400 may include materials with high specific heat performance. Accordingly, since the potting resin 400 increases the thermal mass and delays the temperature rise of the battery cells 110 even in situations such as rapid charging and discharging of the battery cells 110 of the cell assemblies 100, it is possible to prevent rapid temperature rise of the battery cells 110.

The potting resin 400 may contain materials with high heat resistance. Accordingly, when a thermal event due to overheating or the like occurs in the battery cell 110 of at least one specific cell assembly 100 among the plurality of cell assemblies 100, the potting resin 400 may effectively prevent chain ignition or additional thermal runaway due to thermal propagation to adjacent cell assemblies 100.

The potting resin 400 may include materials with high flame retardant performance. Accordingly, the potting resin 400 may minimize the risk of fire when a thermal event due to overheating or the like occurs in the battery cell 110 of at least one specific cell assembly 100 among the plurality of cell assemblies 100.

As described above, in the battery pack 20 according to an embodiment of the present disclosure, since the ejected matter G emitted from the venting portion 115 of the battery cell 110 during a thermal event is prevented from flowing in the upper direction (+Z-axis direction) inside the pack case 200 by means of the potting resin 400, it is possible to more reliably guide induced ejection of the ejected matter G for lower venting.

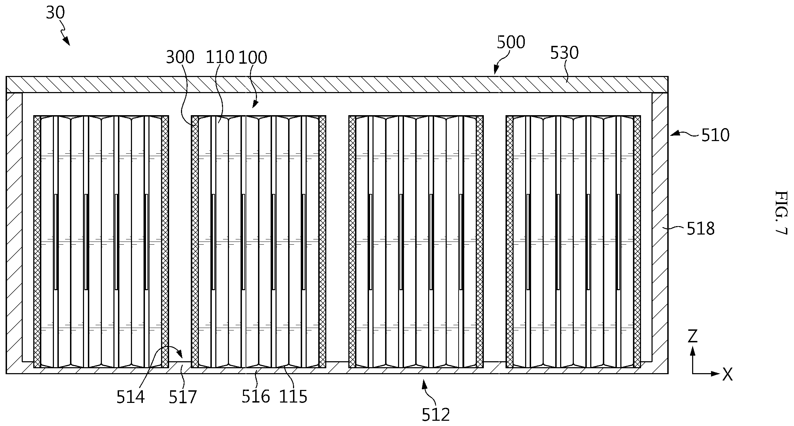

FIG. 7 is a view for describing a battery pack 30 according to still another embodiment of the present disclosure.

Since the battery pack 30 according to this embodiment is similar to the battery pack 10 of the previous embodiment, redundant description of the same or similar configurations as the previous embodiment will be omitted, and the following will focus on the differences from the previous embodiment.

Referring to FIG. 7, the battery pack 30 may include a plurality of cell assemblies 100, a plurality of partition members 300, and a pack case of 500.

Since the plurality of cell assemblies 100 and the plurality of partition members 300 are substantially the same or similar to the previous embodiment, redundant description will be omitted below.

The pack case 500 may include a case body 510 and a case cover 530. In this embodiment, the case cover 530 is similar to the previous embodiment, so the following will focus on the case body 510.

The case body 510 may include a bottom plate 512 and a side plate 518. **In** this embodiment, the side plate 518 is similar to the previous embodiment, so the following will focus on the bottom plate 512.

An accommodation portion 514 may be formed on the bottom plate 512.

The accommodation portion 514 may accommodate a part of the cell assemblies 100 and the partition members 300. Specifically, the accommodation portion 514 may accommodate the cell assemblies 100 surrounded by the partition members 300, respectively. More specifically, the lower end of each cell assembly 100 surrounded by the partition member 300 and the lower end of the partition member 300 may be inserted into the accommodation portion 514. Accordingly, the accommodation portion 514 may be formed to have a concave-convex shape along the arrangement direction (X-axis direction) of the cell assemblies 100 at the upper side (+Z-axis direction) of the inner surface of the bottom of the bottom plate 512.

The accommodation portion 514 may include a seating portion 516 and a step portion 517. The lower ends of the cell assembly 100 and the partition member 300 may be accommodated in the seating portion 516. The step portion 517 may be provided at a predetermined height between the cell assemblies 100 surrounded by the partition members 300. Meanwhile, the thickness of the seating portion 516 may be thinner than that of the step portion 517 and the side plate 518. This is to open the bottom plate 512 more quickly through easier rupture or melting during the thermal event because the seating portion 516 faces the venting portions 115 of the battery cells 110 of the cell assemblies 100.

The seating portion 516 and the step portion 517 may be alternately arranged along the longitudinal direction (X-axis direction) of the bottom plate 512. In other words, in the longitudinal direction (X-axis direction) of the bottom plate 512, one step portion 517 may be placed between two seating portions 516, and one seating portion 516 may be placed between two step portions 517. However, in the bottom plate 512, the step portions 517 may be disposed at both ends adjacent to the side plate 518 of the case body 510 of the pack case 500.

In the battery pack 30 according to this embodiment, the plurality of cell assemblies 100 and the partition members 300 may be more stably accommodated and supported within the pack case 200 by means of the accommodation portion 514 provided on the bottom plate 512 of the pack case 500.

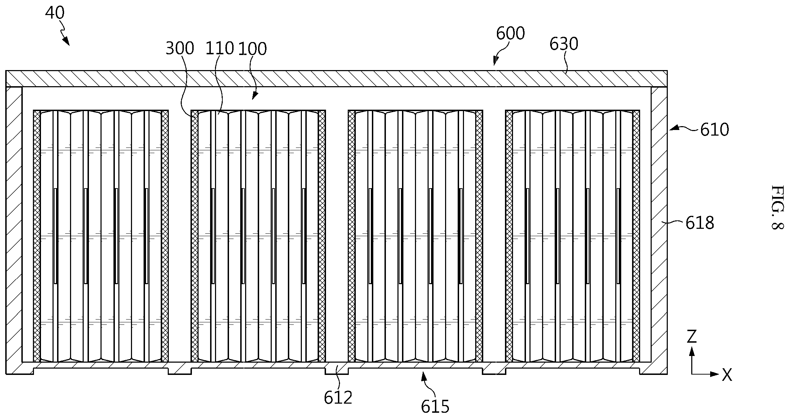

FIG. 8 is a view for describing a battery pack 40 according to still another embodiment of the present disclosure.

Since the battery pack 40 according to this embodiment is similar to the battery pack 10 of the previous embodiment, redundant description of the same or similar configurations as the previous embodiment will be omitted, and the following will focus on the differences from the previous embodiment.

Referring to FIG. 8, the battery pack 40 may include a plurality of cell assemblies 100, a plurality of partition members 300, and a pack case 600.

Since the plurality of cell assemblies 100 and the plurality of partition members 300 are substantially the same or similar to the previous embodiment, redundant description will be omitted below.

The pack case 600 may include a case body 610 and a case cover 630. In this embodiment, the case cover 630 is similar to the previous embodiment, so the following will focus on the case body 610.

The case body 610 may include a bottom plate 612 and a side plate 618. In this embodiment, the side plate 618 is similar to the previous embodiment, so the following will focus on the bottom plate 612.

A venting guide 615 may be formed on the bottom plate 612.

The venting guide 615 may be ruptured or melted during the aforementioned thermal event to guide the ejected matter such as high-temperature gas or flame emitted from the venting portions 115 of the battery cells 110 to be discharged the lower side (-Z-axis direction) of the bottom plate 612.

The venting guide 615 may be formed to have a predetermined depth from the outer surface of the bottom of the bottom plate 612 to have a relatively thin thickness at the bottom of the bottom plate 612. In addition, the venting guide 615 may be formed at positions corresponding to the bottoms of the venting portions 115 of the battery cells 110 of the plurality of cell assembly 100, respectively. Accordingly, unlike the bottom plate 512 of FIG. 7, the bottom plate 612 may be formed in a structure with a convex-convex shape on the lower side (-Z-axis direction) of the outer surface of the bottom rather than the upper side (+Z-axis direction) of the inner surface of the bottom due to the venting guides 615 provided in a predetermined depth on the lower side (-Z-axis direction) of the outer surface of the bottom of the bottom plate 612.

In this embodiment, since the venting guide 615 is in contact with the venting portions 115 of the battery cells 110 and has a relatively thin thickness at the bottom of the bottom plate 612, it is possible to implement faster downward induced venting during the thermal event described above.

Additionally, in the embodiment of the present disclosure, on the lower side (-Z-axis direction) of the outer surface of the bottom of the bottom plate 612, since the portion of the bottom plate 612 between the venting guides 615 is formed in a structure that protrudes further toward the lower portion (-Z-axis direction), it is possible to effectively prevent the ejected matter emitted out of a specific venting guide 615 or particles generated due to rupture or melting of a specific venting guide 615 from being dispersed toward adjacent venting guides 615. That is, in an embodiment of the present disclosure, through the convex-convex structure on the lower side (-Z-axis direction) of the outer surface of the bottom plate 612 provided by the venting guide 615, when the ejected matter is induced to be ejected downward, it is possible to effectively prevent the ejected matter from being dispersed in the left and right directions (X-axis direction) of the bottom plate 612.

Therefore, in an embodiment of the present disclosure, through the venting guide 615, the discharge direction of the ejected matter during the thermal event can be more clearly guided to the lower direction (-Z-axis direction) of the pack case 600.

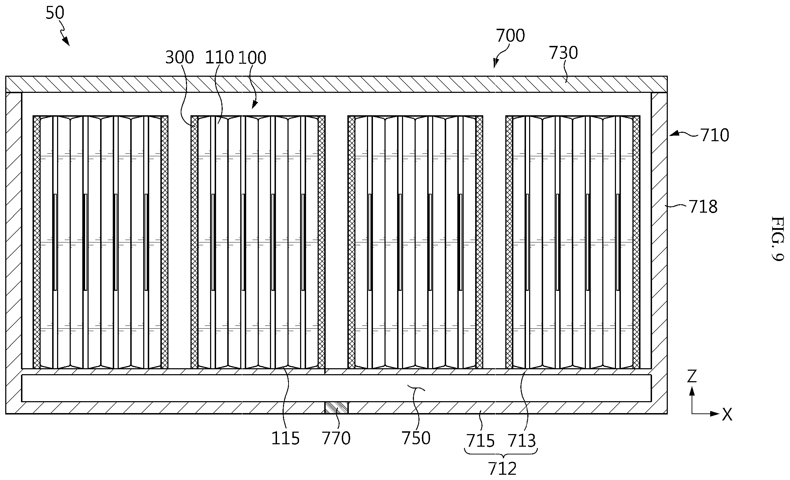

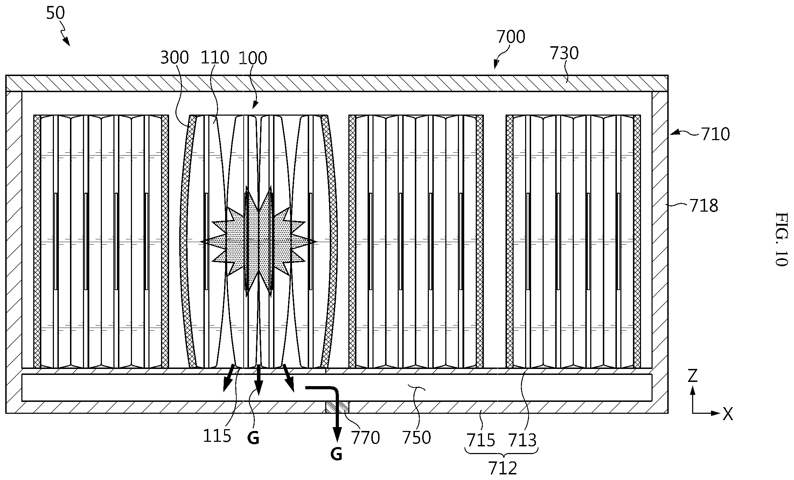

FIG. 9 is a view for describing a battery pack 50 according to still another embodiment of the present disclosure, and FIG. 10 is a view for describing a venting mechanism during a thermal event of the battery pack 50 of FIG. 9.

Since the battery pack 50 according to this embodiment is similar to the battery pack 10 of the previous embodiment, redundant description of the same or similar configurations as the previous embodiment will be omitted, and the following will focus on the differences from the previous embodiment.

Referring to FIGS. 9 and 10, the battery pack 50 may include a plurality of cell assemblies 100, a plurality of partition members 300, and a pack case 700.

Since the plurality of cell assemblies 100 and the plurality of partition members 300 are substantially the same or similar to the previous embodiment, redundant description will be omitted below.

The pack case 700 may include a case body 710, a case cover 730, a guide channel 750, and a venting unit 770.

The case body 710 may include a bottom plate 712 and a side plate 718. In this embodiment, the side plate 718 is similar to the previous embodiment, so the following will focus on the bottom plate 712.

The bottom plate 712 may include a first plate 713 and a second plate 715.

The first plate 713 may support the plurality of cell assemblies 100 and the partition members 300. The first plate 713 may be placed to directly face the venting portions 115 of the plurality of battery cells 110, and may have a relatively thin thickness for easier rupture or melting during the thermal event described above. For example, the first plate 713 may be prepared to have a thinner thickness than the second plate 715, which will be described later.

The second plate 715 may be arranged to be spaced apart from the first plate 713 by a predetermined distance in the height direction (Z-axis direction) of the pack case 600. Accordingly, a predetermined space may be formed between the second plate 715 and the first plate 713. This predetermined space may function as a guide channel 750, which will be described later.

Since the case cover 730 is substantially the same or similar to the previous embodiment, redundant description will be omitted below.

The guide channel 750 may be formed in the space between the first plate 713 and the second plate 715. The guide channel 750 may guide the ejected matter G, such as high-temperature gas or flame, emitted through the venting portion 115 of the battery cells 110 and the first plate 713 during a thermal event of the cell assembly 100 toward the venting unit 770, which will be described later. The guide channel 750 may guide the ejected matter G, such as particles generated due to rupture or melting of the first plate 713 during the thermal event, toward the venting unit 770, which will be described later.

The venting unit 770 is provided in the second plate 715, and may emit the ejected matter G, which is ruptured or melted during a thermal event and guided to the guide channel 750, out of the pack case 700. In addition to the structure that ruptures or melts at a predetermined temperature or pressure or above, the venting unit 770 may also be provided with a structure that is opened or communicates the inside and the outside of the pack case 700 at a predetermined temperature or pressure or above. Ultimately, the venting structure of the venting unit 770 may be either a passive structure or an active structure capable of emitting the ejected matter G. Meanwhile, the location of the venting unit 770 in the second plate 715 may correspond to the location of the fire extinguishing device or components for fire suppression outside the pack case 700. In addition, of course, the venting unit 770 may be provided in plurality on the second plate 715.

In the battery pack 50 according to an embodiment of the present disclosure, through the bottom plate 712 composed of the first and second plates 713, 715 forming the guide channel 750, the ejected matter such as particles that may occur on the first plate 713 facing the battery cells 110 during the thermal event may also be effectively emitted to the outside of the pack case 700.

In addition, in the battery pack 50 according to an embodiment of the present disclosure, through the venting unit 770 provided in the second plate 715, the effect of induced ejection in a specific direction can be maximized when directional venting to the lower side.

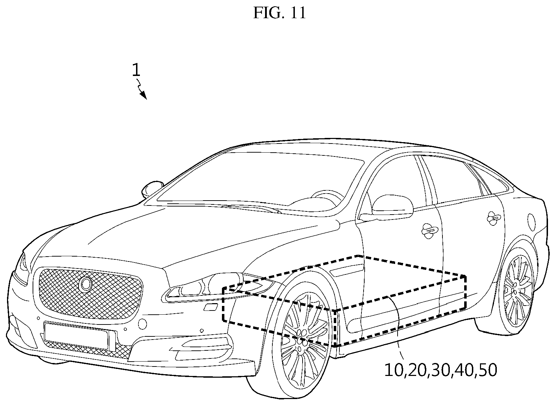

FIG. 11 is a view for describing a vehicle 1 according to an embodiment of the present disclosure.

Referring to FIG. 11, the vehicle 1 according to an embodiment of the present disclosure may include one or more battery packs 10, 20, 30, 40, 50 according to the present disclosure. In addition, the vehicle 1 according to an embodiment of the present disclosure may further include various other components included in the vehicle in addition to the battery packs 10, 20, 30, 40, 50. For example, the vehicle 1 according to an embodiment of the present disclosure may further include a vehicle body, a motor, a control device such as ECU (electronic control unit), etc. in addition to the battery packs 10, 20, 30, 40, 50 according to an embodiment of the present disclosure.

In addition, the battery pack 10, 20, 30, 40, 50 according to the previous embodiments of the present disclosure may also be provided to other devices, instruments, and facilities, such as an energy storage system using a secondary battery, in addition to the vehicle 1.

As described above, since the vehicle 1 according to an embodiment of the present disclosure includes the battery packs 10, 20, 30, 40, 50 of the previous embodiments, the vehicle 1 may also secure safety against the aforementioned thermal event.

According to various embodiments as described above, it is possible to provide a battery pack 10, 20, 30, 40, 50 with improved safety against thermal events and a vehicle 1 including the battery pack.

In addition, according to various embodiments as described above, it is possible to provide a battery pack 10, 20, 30, 40, 50 that can increase energy efficiency while slimming down the battery pack, and a vehicle 1 including the battery pack.

## Claims

1. A battery pack (10), comprising:
a plurality of cell assemblies (100) containing one or more battery cells (110) and arranged in at least one row;
a pack case (200) configured to accommodate the plurality of cell assemblies (100); and
a partition member (300) configured to partition the plurality of cell assemblies (100) within the pack case (200) and made of flexible material, wherein the partition member (300) is in close contact with the plurality of cell assemblies (100),
**characterized in that**
a venting portion (115) is provided at a lower portion of the one or more battery cells (110), and
a bottom of the pack case (200) faces the venting portion (115) and is ruptured or melted, when gas or flame is discharged through the venting portion (115), to discharge the gas or flame out of the pack case (200).

2. The battery pack (10) according to claim 1, wherein the partition member (300) is in close contact with a side surface of the plurality of cell assemblies (100) in an arrangement direction of the plurality of cell assemblies (100).

3. The battery pack (10) according to claim 1, wherein the partition member (300) is made of fire-resistant rubber material.

4. The battery pack (10) according to claim 1, wherein the partition member (300) is made of insulating rubber material.

5. The battery pack (10) according to claim 1, wherein the partition member (300) is placed between the plurality of cell assemblies (100) in an arrangement direction of the plurality of cell assemblies (100).

6. The battery pack (10) according to claim 1, wherein the partition member (300) is provided in plurality corresponding to the number of the plurality of cell assemblies (100), and
wherein the plurality of partition members (300) are in close contact with both side surfaces of each cell assembly (100).

7. The battery pack (10) according to claim 6, wherein the plurality of partition members (300) are arranged to be spaced from each other by a predetermined distance in an arrangement direction of the plurality of cell assemblies (100).

8. The battery pack according to claim 1, wherein the partition member (300) surrounds side surfaces of the plurality of cell assemblies (100) while exposing the venting portion (115).

9. The battery pack (10) according to any one of claims 1 to 7, wherein the pack case (200) includes:
a case body (210) configured to support the plurality of cell assemblies (100) and the partition member (300); and
a case cover (230) coupled with the case body (210) to accommodate the plurality of cell assemblies (100) and the partition member (300).

10. The battery pack (10) according to claim 9, wherein a potting resin (400) is filled in the space between the plurality of cell assemblies (100) and the case cover (230).

11. The battery pack (10) according to claim 10, wherein the potting resin (400) is filled in the space between the plurality of cell assemblies (100).

12. A vehicle (1) comprising the battery pack (10) according to any one of claims 1 to 11.

## Patentansprüche

1. Batteriepack (10), umfassend:
eine Mehrzahl von Zellenanordnungen (100), welche eine oder mehrere Batteriezellen (110) enthalten und in wenigstens einer Reihe angeordnet sind;
ein Packgehäuse (200), welches dazu eingerichtet ist, die Mehrzahl von Zellenanordnungen (100) aufzunehmen; und
ein Trennelement (300), welches dazu eingerichtet ist, die Mehrzahl von Zellenanordnungen (100) in dem Packgehäuse (200) zu trennen, und welches aus einem flexiblen Material hergestellt ist, wobei das Trennelement (300) in engem Kontakt mit der Mehrzahl von Zellenanordnungen (100) steht,
**dadurch gekennzeichnet, dass** ein Entlüftungsabschnitt (115) an einem unteren Abschnitt der einen oder mehreren Batteriezellen (110) bereitgestellt ist, und
ein Boden des Packgehäuses (200) dem Entlüftungsabschnitt (115) zugewandt ist und aufgerissen oder geschmolzen wird, wenn Gas oder Flammen durch den Entlüftungsabschnitt (115) ausgestoßen werden, um das Gas oder die Flammen aus dem Packgehäuse (200) abzuführen.

2. Batteriepack (10) nach Anspruch 1, wobei das Trennelement (300) in engem Kontakt mit einer Seitenfläche der Mehrzahl von Zellenanordnungen (100) in einer Anordnungsrichtung der Mehrzahl von Zellenanordnungen (100) steht.

3. Batteriepack (10) nach Anspruch 1, wobei das Trennelement (300) aus einem feuerbeständigen Gummimaterial hergestellt ist.

4. Batteriepack (10) nach Anspruch 1, wobei das Trennelement (300) aus einem isolierenden Gummimaterial hergestellt ist.

5. Batteriepack (10) nach Anspruch 1, wobei das Trennelement (300) zwischen der Mehrzahl von Zellenanordnungen (100) in einer Anordnungsrichtung der Mehrzahl von Zellenanordnungen (100) platziert ist.

6. Batteriepack (10) nach Anspruch 1, wobei das Trennelement (300) in einer Mehrzahl entsprechend der Anzahl der Mehrzahl von Zellenanordnungen (100) bereitgestellt ist, und
wobei die Mehrzahl von Trennelementen (300) in engem Kontakt mit beiden Seitenflächen jeder Zellenanordnung (100) stehen.

7. Batteriepack (10) nach Anspruch 6, wobei die Mehrzahl von Trennelementen (300) angeordnet sind, um voneinander um einen vorbestimmten Abstand in einer Anordnungsrichtung der Mehrzahl von Zellenanordnungen (100) beabstandet zu sein.

8. Batteriepack nach Anspruch 1, wobei das Trennelement (300) Seitenflächen der Mehrzahl von Zellenanordnungen (100) umgibt, während es den Entlüftungsabschnitt (115) freilässt.

9. Batteriepack (10) nach einem der Ansprüche 1 bis 7, wobei das Packgehäuse (200) umfasst:
einen Gehäusekörper (210), welcher dazu eingerichtet ist, die Mehrzahl von Zellenanordnungen (100) und das Trennelement (300) zu haltern, und
eine Gehäuseabdeckung (230), welche mit dem Gehäusekörper (210) gekoppelt ist, um die Mehrzahl von Zellenanordnungen (100) und das Trennelement (300) aufzunehmen.

10. Batteriepack (10) nach Anspruch 9, wobei ein Vergussharz (400) in den Raum zwischen der Mehrzahl von Zellenanordnungen (100) und der Gehäuseabdeckung (230) gefüllt ist.

11. Batteriepack (10) nach Anspruch 10, wobei das Vergussharz (400) in den Raum zwischen der Mehrzahl von Zellenanordnungen (100) gefüllt ist.

12. Fahrzeug (1), umfassend den Batteriepack (10) nach einem der Ansprüche 1 bis 11.

## Revendications

1. Bloc-batterie (10), comprenant :
une pluralité d'ensembles de cellules (100) contenant une ou plusieurs cellules de batterie (110) et agencés en au moins une rangée ;
un boîtier de bloc (200) configuré pour loger la pluralité d'ensembles de cellules (100) ; et
un organe de séparation (300) configuré pour séparer la pluralité d'ensembles de cellules (100) à l'intérieur du boîtier de bloc (200) et constitué d'un matériau souple, dans lequel l'organe de séparation (300) est en contact étroit avec la pluralité d'ensembles de cellules (100),
**caractérisé en ce qu'**une partie de ventilation (115) est prévue au niveau d'une partie inférieure des une ou plusieurs cellules de batterie (110), et
un fond du boîtier de bloc (200) fait face à la partie de ventilation (115) et est rompu ou fondu, lorsque du gaz ou une flamme est évacué(e) à travers la partie de ventilation (115), pour évacuer le gaz ou la flamme hors du boîtier de bloc (200).

2. Bloc-batterie (10) selon la revendication 1, dans lequel l'organe de séparation (300) est en contact étroit avec une surface latérale de la pluralité d'ensembles de cellules (100) dans une direction d'agencement de la pluralité d'ensembles de cellules (100).

3. Bloc-batterie (10) selon la revendication 1, dans lequel l'organe de séparation (300) est constitué d'un matériau en caoutchouc résistant au feu.

4. Bloc-batterie (10) selon la revendication 1, dans lequel l'organe de séparation (300) est constitué d'un matériau en caoutchouc isolant.

5. Bloc-batterie (10) selon la revendication 1, dans lequel l'organe de séparation (300) est placé entre la pluralité d'ensembles de cellules (100) dans une direction d'agencement de la pluralité d'ensembles de cellules (100).

6. Bloc-batterie (10) selon la revendication 1, dans lequel l'organe de séparation (300) est fourni en une pluralité correspondant au nombre de la pluralité d'ensembles de cellules (100), et
dans lequel la pluralité d'organes de séparation (300) sont en contact étroit avec les deux surfaces latérales de chaque ensemble de cellules (100).

7. Bloc-batterie (10) selon la revendication 6, dans lequel la pluralité d'organes de séparation (300) sont agencés pour être espacés les uns des autres d'une distance prédéterminée dans une direction d'agencement de la pluralité d'ensembles de cellules (100).

8. Bloc-batterie selon la revendication 1, dans lequel l'organe de séparation (300) entoure des surfaces latérales de la pluralité d'ensembles de cellules (100) tout en exposant la partie de ventilation (115).

9. Bloc-batterie (10) selon l'une quelconque des revendications 1 à 7, dans lequel le bloc-batterie (200) comporte :
un corps de boîtier (210) configuré pour supporter la pluralité d'ensembles de cellules (100) et l'organe de séparation (300) ; et
un couvercle de boîtier (230) couplé au corps de boîtier (210) pour loger la pluralité d'ensembles de cellules (100) et l'organe de séparation (300).

10. Bloc-batterie (10) selon la revendication 9, dans lequel une résine d'enrobage (400) est injectée dans l'espace entre la pluralité d'ensembles de cellules (100) et le couvercle de boîtier (230).

11. Bloc-batterie (10) selon la revendication 10, dans lequel la résine d'enrobage (400) est injectée dans l'espace entre la pluralité d'ensembles de cellules (100).

12. Véhicule (1), comprenant le bloc-batterie (10) selon l'une quelconque des revendications 1 à 11.
